Europäisches Patentamt

European Patent Office

Office européen des brevets

(19)

(11) Veröffentlichungsnummer : **0 071 114**
**B1**

(12) **EUROPÄISCHE PATENTSCHRIFT**

(45) Veröffentlichungstag der Patentschrift :
07.05.86

(21) Anmeldenummer : 82106422.7

(22) Anmeldetag : 16.07.82

(51) Int. Cl.⁴ : **A 23 L  1/216**, A 23 C 19/08

(54) **Kartoffelzubereitung.**

(30) Priorität : 22.07.81 DEU 8121405

(43) Veröffentlichungstag der Anmeldung :
09.02.83 Patentblatt 83/06

(45) Bekanntmachung des Hinweises auf die Patenterteilung : 07.05.86 Patentblatt 86/19

(84) Benannte Vertragsstaaten :
AT BE CH DE FR GB IT LI NL

(56) Entgegenhaltungen :
CH-A-   538 814
DE-A- 1 517 021
DE-A- 2 300 863
FR-A-   977 242
FR-A- 2 464 654
GB-A-    17 937
Die Akte enthält technische Angaben, die nach dem
Eingang der Anmeldung eingereicht wurden und die
nicht in dieser Patentschrift enthalten sind.

(73) Patentinhaber : Molkerei-Zentrale Süd GmbH & Co.
KG
Platenstrasse 31
D-8500 Nürnberg (DE)

(72) Erfinder : Kiesl, Walter, Dr.
Platenstrasse 31
D-8500 Nürnberg 70 (DE)
Erfinder : Wehrum, Roland
Platenstrasse 31
D-8500 Nürnberg 70 (DE)

(74) Vertreter : Lehmann, Klaus, Dipl.-Ing. et al
Patentanwälte Schroeter & Lehmann Postfach 70 17
47 Lipowskystrasse 10
D-8000 München 70 (DE)

## Beschreibung

Die Erfindung betrifft eine Kartoffelzubereitung aus rohen, geriebenen und getrockneten Kartoffeln. Dieses als « Kartoffelreibsel » bekannte Produkt wird aus rohen Kartoffeln gewonnen, die gerieben und anschließend getrocknet werden. Solches Kartoffelreibsel wurde bisher industriell, gewerblich oder im Haushalt weiterverwendet, um daraus z. B. Klöße, Knödel, Auflauf, Geröstel oder Omelettes herzustellen.

Das Kartoffelreibsel ist eine lockere, schnitzelförmige und schüttfähige Masse, die keine bestimmte dauerhafte Eigenform annehmen kann, so daß sie bei der Handhabung Schwierigkeiten bietet und zur Lagerung, zum Handel und zum Transport in geeignete Verpackungen abgefüllt werden muß.

Aus der CH-A 538 814 ist die Herstellung einer Schmelzkäsemasse mit Einschlüssen bekannt, die mit der Käsemasse praktisch nicht vermischt werden sollen. Es können verschiedene Gemüse- oder Fleischbestandteile, also auch Kartoffeln, in die Käsemasse injiziert werden, wobei die Viskosität der Masse so nahe wie möglich an derjenigen des Käses gehalten werden soll. Das Ausgangsprodukt und der überwiegende Bestandteil des Endproduktes ist also Schmelzkäse, während bei der Erfindung das Ausgangsprodukt eine bestimmte Art von Kartoffelzubereitung ist, der eine bestimmte Form gegeben werden soll und die die Eigenschaften des Endproduktes maßgeblich bestimmt.

Aus der FR-A 977 242 ist die Behandlung von Kartoffeln in gekochtem Zustand bekannt, wobei diese durch Pasteurisation konserviert und anschließend in Folienumhüllungen eingebracht werden sollen. Hierzu werden die ganzen Kartoffeln zunächst gekocht, dann mit Käse vermischt und unter ständigem Umrühren einer Hitzebehandlung unterworfen. Unter dem Einfluß der Hitze und des Rührens schwillt und löst sich das Kasein des Käses und umhüllt die Stärkekörnchen der Kartoffeln, die auf diese Weise geschützt und in einer stabilen Emulsion gehalten werden. Die so erhaltene Paste, die durch Abkühlung hart wird, wird in Umhüllungen eingegeben, und das Endprodukf kann kalt oder warm, auch mit anderen Nahrungsmitteln gemischt oder nach Art einer Suppe genossen werden. Während hierbei immer nur gekochte Kartoffeln verwendet werden sollen, geht die Erfindung ausdrücklich von rohen getrockneten Kartoffeln aus, so daß hier aufgrund des wesentlich geringeren Wassergehaltes andere Voraussetzungen vorliegen.

Der Erfindung liegt die Aufgabe zugrunde, diesem Kartoffelreibsel bzw. einer unter Verwendung von Kartoffelreibsel hergestellten Kartoffelzubereitung eine kompakte und dauerhafte Form zu geben, in der das Kartoffelreibsel bzw. die Kartoffelzubereitung lagerfähig, handelsfähig und transportabel ist.

Dies wird erfindungsgemäß durch die im Anspruch 1 angegebenen Merkmale erreicht, also im wesentlichen dadurch, daß die einzelnen Teilchen des Kartoffelreibsels mittels Schmelzkäse miteinander dauerhaft zu einem formbeständigen Körper verbunden sind, der die Form eines Blocks hat. In dieser Blockform läßt sich das Kartoffelreibsel bis zum Verbrauch leicht handhaben, also lagern, transportieren und in den Handel bringen.

Von besonderem Vorteil ist es hierbei, wenn die Teilchen des Kartoffelreibsels weitgehend gleichmässig im Schmelzkäse verteilt sind, so daß sich eine einheitliche, homogene Kartoffelzubereitung ergibt.

Der Block kann jede geeignete oder gewünschte dauerhafte Eigenform aufweisen. Bevorzugte Beispiele hierfür sind in Anspruch 3 gekennzeichnet.

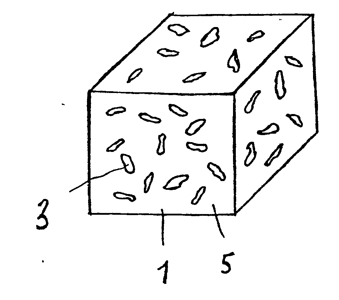

Die Zeichnung zeigt ein Ausführungsbeispiel eines erfindungsgemässen Blocks einer Kartoffelzubereitung.

Eine Vielzahl von einzelnen rohen, geriebenen und getrockneten Kartoffelteilchen 3 (Kartoffelreibsel) ist mittels Schmelzkäse 5 zu einem Block 1 dauerhaft und formbeständig verbunden. Hierbei ist die Zahl der einzelnen Teilchen 3 des Kartoffelreibsels im Block 1 gegenüber der Menge des Schmelzkäses 5 in der Praxis erheblich größer. Der Block besteht also im wesentlichen aus Kartoffelteilchen 3. Diese sind weitgehend gleichmässig oder so gleichmässig wie möglich in dem Schmelzkäse 5 verteilt. Der Block 1 kann für die Herstellung, die Lagerung, den Transport und den Handel die unterschiedlichsten Formen annehmen. Die Zeichnung zeigt als Ausführungsbeispiel für den Block einen Quader oder Würfel, der nach der Herstellung seine Form beibehält und für die Lagerung und den Vertrieb in geeigneter Weise verpackt werden kann.

Die Herstellung des erfindungsgemässen Blocks kann beispielsweise wie folgt geschehen : Rohe Kartoffeln werden gerieben und anschließend über Walzen- oder Trocknungstürme getrocknet, wobei das Kartoffelreibsel entsteht. Das Kartoffelreibsel wird dann mit heißer, also mehr oder weniger flüssiger Käseschmelzmasse vermischt und zu einer Schmelzkäsezubereitung verarbeitet und in Formen gegeben. Nach dem Abkühlen und Erstarren behält die Zubereitung die gegebene Form bei.

Die erfindungsgemässe Kartoffelzubereitung kann wie normale Kartoffeln oder herkömmliches Kartoffelreibsel verarbeitet werden, also zum Beispiel zu Kartoffelpuffern, Klößen, Auflauf oder Geröstel. Beim Rösten tritt eine Braunfärbung über die gesamte Oberfläche ein.

Der erfindungsgemässen Kartoffelzubereitung können bei der Herstellung weitere Zutaten beigegeben werden, wie Zwiebeln, Fleischstückchen, Grieben, Schinken oder Bratensoße, wodurch das Endprodukt noch schmackhafter gemacht werden kann, so daß es sich zur Herstellung von Omelette, Auflauf oder Geröstel in warmer Form besonders eignet. Man kann somit ein Fertiggericht herstellen, das ohne besondere weitere Aufbereitung und Zutaten, also beispielsweise auch mit nur wenig Fett, zur Verarbeitung in einer Pfanne gebrauchsfertig angeboten werden kann.

Die Mengenverhältnisse von Kartoffelreibsel und Schmelzkäse sind variabel. Für den Vertrieb wird das Produkt nach lebensmittelrechtlichen Vorschriften als Schmelzkäsezubereitung deklariert werden müssen.

## Patentansprüche

1. Kartoffelzubereitung aus rohen, geriebenen und getrockneten Kartoffeln (« Kartoffelreibsel »), dadurch gekennzeichnet, daß die einzelnen Teilchen (3) des Kartoffelreibsels miteinander mittels Schmelzkäse (5) zu einem formbeständigen Körper in Form eines Blocks (1) verbunden sind.

2. Kartoffelzubereitung nach Anspruch 1, dadurch gekennzeichnet, daß die Teilchen (3) des Kartoffelreibsels weitgehend gleichmässig im Schmelzkäse verteilt sind.

3. Kartoffelzubereitung nach Anspruch 1, dadurch gekennzeichnet, daß der Block (1) die Form eines Zylinders, eines Zylinderabschnitts, einer Wurst, eines Quaders, eines Würfels, einer Scheibe, einer Torte oder eines Tortenstücks hat.

4. Verfahren zur Herstellung einer Kartoffelzubereitung nach Anspruch 1, dadurch gekennzeichnet, daß zunächst rohe Kartoffeln gerieben und anschließend getrocknet werden, worauf man das so entstandene Kartoffelreibsel mit heißer Käseschmelzmasse vermischt, in Formen gibt und abkühlen läßt.

5. Verfahren nach Anspruch 4, dadurch gekennzeichnet, daß dem Kartoffelreibsel weitere Zutaten beigegeben werden, wie beispielsweise Zwiebeln, Fleisch, Grieben, Schinken, Bratensauce.

## Claims

1. Potato preparation made from raw, grated and dried potatoes (« potato scrapings »), characterized in that the individual particles (3) of the potato scrapings are interconnected with each other by melted cheese (5) into a form-maintaining body in the shape of a block (1).

2. Potato preparation according to claim 1, characterized in that the particles (3) of the potato scrapings are distributed largely uniformly in the melted cheese.

3. Potato preparation according to claim 1, characterized in that the block (1) has the form of a cylinder, a cylinder section, a sausage, a square, a cube, a disk, a tart or a piece of tart.

4. Method of manufacturing a potato preparation according to claim 1, characterized in that at first raw potatoes are grated and thereafter dried, whereafter the thus obtained potato scrapings are mixed with hot cheese mass, put in moulds and cooled down.

5. Method according to claim 4, characterized in that further garnishings, such as for example onions, meat, greaves, ham, roast-meat sauce, are added to the potato scrapings.

## Revendications

1. Préparation aux pommes de terre, faite de pommes de terre crues, râpées et séchées (« pommes de terre râpées »), caractérisée en ce que des particules (3) de pommes de terre râpées sont réunies entre elles, au moyen de fromage fondu (5), en un bloc de forme constante (1).

2. Préparation aux pommes de terre suivant la revendication 1, caractérisée en ce que les particules (3) de pommes de terre râpées sont réparties d'une manière régulière dans le fromage fondu.

3. Préparation aux pommes de terre suivant la revendication 1, caractérisée en ce que le bloc (1) a la forme d'un cylindre, d'un cylindre tronqué, d'une saucisse, d'un carré, d'un dé, d'une rondelle, d'un gâteau ou d'un morceau de gâteau.

4. Procédé pour la fabrication d'une préparation aux pommes de terre suivant la revendication 1, caractérisée en ce que des pommes de terre crues sont d'abord râpées, puis séchées ; qu'ensuite les pommes de terre râpées ainsi obtenues sont mélangées à une masse très chaude de fromage fondu, puis mises dans des moules et laissées refroidir.

5. Procédé suivant la revendication 4, caractérisé en ce qu'on ajoute aux pommes de terre râpées d'autres ingrédients, comme des oignons, de la viande, des rillons, du jambon, de la sauce de rôti.